# EUROPÄISCHE PATENTSCHRIFT

(11) **EP 0 464 164 B1**
(45) Veröffentlichungstag und Bekanntmachung des Hinweises auf die Patenterteilung: **08.06.1994**
(21) Anmeldenummer: 91901267.4
(22) Anmeldetag: 10.01.1991
(51) Int. Cl.: F24D 3/14

(54) **VORGEFERTIGTES PLATTENELEMENT FÜR EINE FLÄCHENKLIMATISIERANLAGE**
PREFABRICATED TILE FOR AN UNDERFLOOR-AIR-CONDITIONING SYSTEM
ELEMENT DE PANNEAU PREFABRIQUE POUR UNE INSTALLATION DE CLIMATISATION PAR PANNEAUX

(30) Priorität: 19.01.1990 CH 172/90
(43) Veröffentlichungstag der Anmeldung: 08.01.1992
(73) Patentinhaber: STRAMAX AKTIENGESELLSCHAFT, CH-8004 Zürich (CH)
(72) Erfinder: PIRCHL, Gerhard, CH-5708 Birrwil a. Hallwilersee (CH)
(74) Vertreter: Schmauder, Klaus Dieter
(86) Internationale Anmeldenummer: CH9100007
(87) Internationale Veröffentlichungsnummer: WO9110866

(56) Entgegenhaltungen:
- CH-A- 617 999
- DE-A- 2 535 522
- DE-A- 2 553 967
- DE-A- 2 847 902
- DE-A- 3 411 339

## Beschreibung

Die Erfindung betrifft eine Flächenklimatisieranlage gemäss Oberbegriff des Anspruches 1.

Eine Flächenklimatisieranlage der eingangs genannten Art ist beispielsweise aus der DE-OS 25 35 522 in Form einer Fussbodenheizung bekannt. Dabei ist es nachteilig, dass durch den auf die Isolationsschicht und die Wärmeverteilschicht aufgebrachten Trockenestrich von 20 mm Dicke einerseits eine grosse Aufbauhöhe gegeben ist, die den Einsatz der Flächenklimatisieranlage für Altbausanierungen ungeeignet macht. Zum anderen stellt der Trockenestrich einen grossen Wärmewiderstand dar, zu dessen Milderung diverse komplizierte Ausgestaltungen erforderlich sind.

Die DE-OS 2 553 967 beschreibt eine ähnliche Flächenklimatisieranlage in Form einer Fussbodenheizung, bei der die Ausnehmungen in der Isolationsschicht durch den Freiraum zwischen kreisscheibenförmigen Erhebungen gebildet werden, die mit einer Metallschicht überzogen sind. Als Tragschicht dient ein Trockenstrich. Auch diese Flächenklimatisieranlage erfordert schon wegen der grossen Freiräume zwischen den kreisscheibenförmigen Erhebungen eine besonders stabile Lastverteilschicht und damit eine gesamte Aufbauhöhe, die für eine Altbausanierung unbrauchbar ist.

Die DE-OS 28 47 902 beschreibt eine Flächenklimatisieranlage in Form einer Plattenheizung. Dabei ist eine Wärmedämmschicht mit einer Wärmeleitschicht aus hochverdichtetem keramischem Werkstoff verbunden. Die Leitschicht enthält U-förmige Rillen, in die Rohre für ein Wärmeübertragungsmedium eingeklemmt sind. Das Ganze ist mit einer Folie abgedeckt, über der dann ein Estrich oder gegebenenfalls ein Bodenmaterial angeordnet ist. Diese Flächenklimatisieranlage weist eine gesamte Aufbauhöhe von 80 bis 100 mm auf, die für eine Altbausanierung nicht infrage kommt. Zudem weist der keramische Werkstoff relativ hohe Trägheit auf und ist sehr kostspielig.

Aufgabe der Erfindung ist es, diese eingangs genannte Flächenklimatisieranlage derart weiterzubilden, dass sie für eine Altbausanierung geeignet ist.

Erfindungsgemäss wird die Aufgabe gelöst durch die kennzeichnenden Merkmale des Anspruches 1.

Dadurch, dass die Lastverteilschicht bzw. Tragschicht einerseits mit dem Wärmeleitblech fest verbunden ist und andererseits im Bereich der stufenförmigen Erweiterung der Ausnehmung mittels einer Abdeckleiste grösserer Festigkeit versehen ist, ergibt sich eine derartige Stabilisierung der Lastverteilschicht, dass sie dünner gehalten werden kann als herkömmliche Tragschichten, so dass eine gesamte Aufbauhöhe möglich ist, die annähernd 25 mm ist. Dadurch ist eine solche Flächenklimatisieranlage für eine Altbausanierung besonders geeignet.

Das zusätzliche Aufbringen eines Estrichs ist nicht mehr erforderlich. Auf der Lastverteilschicht kann der Bodenoberbau, wie beispielsweise Keramikfliesen, Teppichboden oder Parkett direkt oder gegebenenfalls nach vorhergehendem Aufbringen einer Ausgleichsschicht angebracht werden. Trotz des niederen Gesamtaufbaus des Plattenelementes ergibt sich dennoch eine gleichmässige Wärmeverteilung, da durch den geringeren Wärmeübergang über den Rohren der Bereich der Lastverteilschicht im wesentlichen gleich stark aufgeheizt wird, wie die benachbarten Bereiche.

Vorteilhafte Ausgestaltungen des Plattenelementes sind in den Ansprüchen 2 bis 16 beschrieben.

Es ist grundsätzlich möglich, die Lastverteilschicht so auszubilden, dass sie auf der Baustelle nach dem Verlegen der Rohre beispielsweise durch Kleben nach Anspruch 15 oder Verrasten nach Anspruch 16 aufgebracht wird. Vorteilhafter ist es, wenn die Lastverteilschicht mit Ausnahme der Abdeckleisten direkt vorfabriziert mit der Isolationsschicht und der Wärmeleitschicht verbunden wird. Nach dem Verlegen der Rohrleitungen brauchen die Ausnehmungen lediglich mittels der Abdeckleisten verschlossen zu werden, so dass das Plattenelement bzw. die Flächenklimatisieranlage zur Aufbringung des Oberbodens bereit ist. Grundsätzlich ist es möglich, die Plattenelemente so auszubilden, dass bei aneinanderstossenden Plattenelementen auch die einzelnen Schichten stumpf aneinanderstossen. Vorteilhaft ist jedoch eine Weiterbildung nach Anspruch 5, denn die die Stosstellen übergreifenden Abdeckleisten ermöglichen eine bessere Lastverteilung und verhindern ein Abzeichnen der Stosstellen am fertigen Oberboden. Eine besonders vorteilhafte Ausgestaltung der Abdeckleisten ergibt sich aus Anspruch 6. Vorteilhaft ist es auch, die Abdeckleisten gemäss Anspruch 7 zu verstärken. Die Abdeckleisten können gesondert angeliefert und montiert werden. Vorteilhaft ist jedoch eine Ausgestaltung nach Anspruch 8, wodurch ein Verlust der Abdeckleisten vermieden und die Montage erleichtert wird. Die Befestigung der Abdeckleisten lässt sich durch eine Ausgestaltung nach Anspruch 9 verbessern.

Besonders vorteilhaft ist eine Ausgestaltung der Plattenelemente nach Anspruch 10, wodurch der gegenseitige Verbund der einzelnen aneinander verlegten Plattenelemente verbessert wird. Dadurch wird ebenfalls die Gefahr des Abzeichnens von Stosstellen am Oberboden verhindert. Besonders vorteilhaft ist es auch, wenn die Plattenelemente nach Anspruch 11 weiter gebildet sind, sodass ein unbeabsichtigtes Lösen aneinandergrenzender Plattenelemente verhindert wird.

Grundsätzlich ist es möglich, die Plattenelemente aus den verschiedensten Materialien aufzubauen. So kann die Isolationsschicht aus natürlichen Materialien bestehen, wie Kork, Fasern und dergleichen. Aber auch Kunststoffe, insbesondere Schaumkunststoffe sind möglich. Dabei können weiter die Isolationsschicht und die Lastverteilschicht aus verschiedenen oder gemäß Anspruch 12 aus gleichen Materialien jedoch in jedem Falle unterschiedlicher Raumgewichte bestehen. Besonders vorteilhafte Werkstoffe sind Megithan^{R} und Reprolit^{R}, die sich als umweltfreundliche, toxikologisch unbedenkliche Werkstoffe erwiesen haben, die überdies hervorragende physikalische Eigenschaften und eine gute Verträglichkeit gegen Fremdstoffe aufweisen.

Die Lastverteilschicht ist vorteilhafterweise nach Anspruch 13 ausgestaltet und ermöglicht so nicht nur eine hohe Festigkeit, sondern insbesondere auch eine gute Wärmeverteilung.

Auf der Unterseite des Plattenelementes kann dieses zusätzlich nach Anspruch 14 ausgestaltet sein, um die Isolations- und Trittschalleigenschaften zu verbessern.

Besonders vorteilhaft ist auch eine Ausgestaltung nach Anspruch 15, bei der die einzelne Schichten miteinander verklebt sind und insbesondere mittels des gleichen Werkstoffes, aus dem die Isolationsschicht und die Lastverteilschicht gemäss Anspruch 12 bestehen. Gegebenenfalls kann, wie bereits erwähnt, die Lastverteilschicht gemäss Anspruch 16 befestigt sein.

Ausführungsbeispiele des Gegenstandes der Erfindung werden nachfolgend anhand der Zeichnungen näher beschrieben, dabei zeigen:
- Figur 1: ein Plattenelement mit einer Isolationsschicht, einer Wärmeleitschicht und einer Lastverteilschicht in Seitenansicht und im Ausschnitt;
- Figur 2: ein Plattenelement mit einem Verankerungsglied an der Wärmeleitschicht, im Querschnitt und im Ausschnitt;
- Figur 3: ein Plattenelement mit angeformtem Befestigungsnocken der Lastverteilschicht in der Isolationsschicht im Querschnitt und im Ausschnitt;
- Figur 4: ein Plattenelement mit einer druckknopfartigen Verrastung der Lastverteilschicht in der Wärmeleitschicht, im Querschnitt und im Ausschnitt; und
- Fig. 5: ein Plattenelement mit druckknopfartiger Verrastung der Abdeckleiste, im Querschnitt und im Ausschnitt;

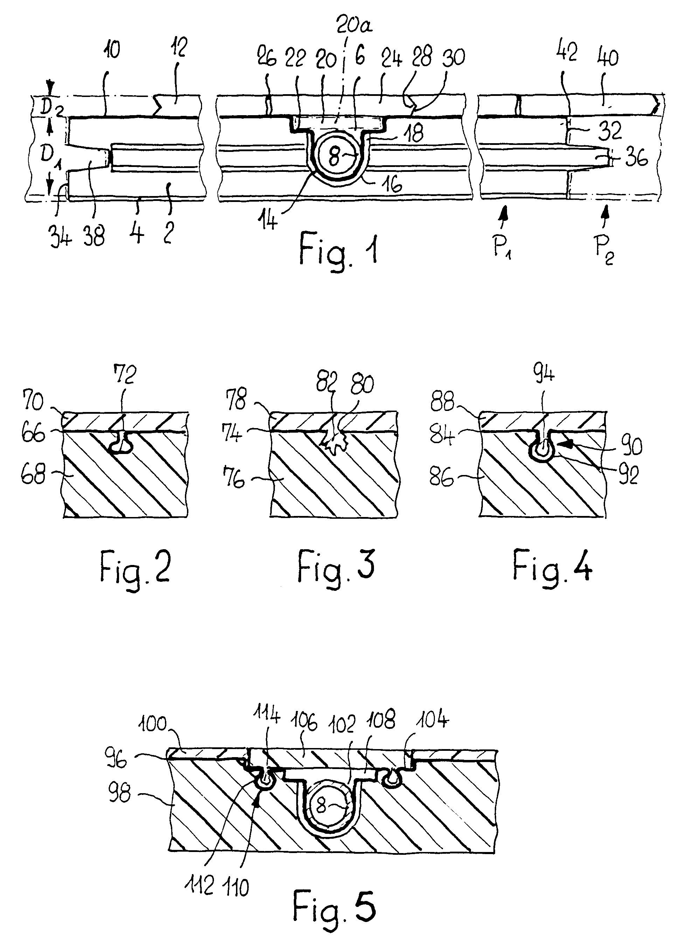

Die Figur 1 zeigt ein Plattenelement im Querschnitt und im Ausschnitt, welches eine Isolationsschicht 2 aufweist, die auf einer Dämpfungsschicht 4, beispielsweise einer Filz- oder Vliesschicht, angeordnet ist. Die Isolationsschicht 2 enthält eine oder mehrere Ausnehmungen 6 für jeweils ein Rohr 8 zur Führung eines Wärmeträgermediums. An der Oberseite der Isolationsschicht 2 und der Ausnehmung 6 ist ein Wärmeleitblech 10 angeordnet, das aus Aluminium besteht. Ueber dem Wärmeleitblech 10 liegt eine Lastverteilschicht 12, deren Dicke D₂ kleiner als die Dicke D₁ der Isolationsschicht ist. Die einzelnen Schichten sind miteinander verklebt.

Die Ausnehmung 6 in der Isolationsschicht 2 ist so ausgebildet, dass die Wärmeleitschicht 10 das Rohr an mindestens 180° fest umschliesst und gleichzeitig einen Luftspalt 14 mit der Innenwandung 16 der Ausnehmung 6 bildet. Zur Abstandhaltung dienen abschnittsweise angeordnete, nach aussen weisende Sicken 18 in dem Wärmeleitblech 10. Dadurch wird die Wärmeübertragung nach unten verringert.

Die Ausnehmung 6 ist so ausgebildet, dass oberhalb des Rohres 8 eine Isolation bis zur Lastverteilschicht 12 vorhanden ist, welche den Wärmeübergang vom Rohr 8 an die Lastverteilschicht 12 dämpft. Diese Isolation wird im einfachsten Falle durch einen Luftspalt 20 gebildet. Zur Verbreiterung des Luftspaltes sind in der Isolationsschicht 2 beidseits des Rohres Ausnehmungen 22 vorhanden. Es ist jedoch auch möglich, in die Ausnehmung 6, einschliesslich der seitlichen Ausnehmungen 22, einen Isolationsstreifen 20a einzulegen, wie dies strichpunktiert angedeutet ist. Dieser Isolationsstreifen 20a kann lose sein oder an der Unterseite einer Abdeckleiste 24 befestigt und mit dieser zusammen eingebracht sein.

Oberhalb der Isolation bzw. des Luftspaltes 20 über dem Rohr 8 ist die Lastverteilschicht 12 unterteilt und enthält die Abdeckleiste 24, die die Ausnehmungen 22 seitlich übergreift. Im gezeigten Beispiel ist die Abdeckleiste 24 auf der linken Seite mittels einer Materialbrücke 26 gelenkig mit den angrenzenden Teilen der Lastverteilschicht 12 verbunden. Auf der rechten Seite weist die Abdeckleiste 24 eine Rastnase 28 auf, mit der sie in eine Hinterschneidung 30 der angrenzenden Lastverteilschicht einrastet. Das Plattenelement ist an seinen Stirnseiten 32,34 so profiliert, dass es mit benachbarten Plattenelementen formschlüssig verrastet. Hierzu weisen zwei aneinanderstossende Stirnseiten 42 einen Kamm 36 auf, der vorzugsweise konisch ausgebildet ist. Die restlichen beiden Stirnseiten 34 sind mit entsprechenden Nuten 38 ausgestattet. Weiter ist die Lastverteilschicht 12 im Bereich der Stirnseiten 32,34 zurückgesetzt und der verbleibende Spalt zwischen benachbarten Plattenelementen wird überbrückt durch eine Abdeckleiste 40, die vorzugsweise analog der Abdeckleiste 24 über der Ausnehmung 6 ausgebildet sein kann. Dadurch wird die Stossstelle 42 zwischen zwei Plattenelementen P₁,P₂ sicher abgedeckt.

Im gezeigten Beispiel besteht das Plattenelement aus der Isolationsschicht 2, die vorzugsweise aus einem geschäumten Megithan^{R} (eine Caprolacton-Verbindung) oder Reprolit^{R} (eine Polyacrylpolyurethan-Verbindung) gebildet ist und vorzugsweise ein Raumgewicht von 800 bis 1000 N/m³ aufweist. Die Dicke D₁ der Isolationsschicht beträgt beispielsweise 18 bis 23 mm. Die Wärmeleitschicht wird durch ein Aluminiumblech gebildet, das beispielsweise eine Dicke von 0,2 bis 0,5 mm aufweisen kann. Die Lastverteilschicht 12 kann beispielsweise eine Dicke D₂ von 2 bis 10 mm aufweisen und ebenfalls aus den verschiedensten Materialien gebildet sein, vorzugsweise besteht sie jedoch ebenfalls aus Megithan^{R} oder Reprolit^{R} mit entsprechend höherer Dichte von beispielsweise 2000 bis 3000 N/m³. In jedem Falle ist die Ausbildung derart, dass die üblichen für Böden erforderlichen Belastungswerte, wie beispielsweise 10000 bis 20000 N/cm², erreicht werden. Die Lastverteilschicht 12 ist zweckmässigerweise mit einem Füllstoff, beispielsweise mit Graphit- oder Aluminiumpulver versehen, um die Wärmeleitfähigkeit zu erhöhen. Gegebenenfalls kann die Lastverteilschicht auch eine Verstärkungseinlage beispielsweise in Form von Glasfasern aufweisen. Die die Ausnehmung überdeckende Abdeckleiste 24 besteht vorzugsweise aus dem gleichen Material wie die Lastverteilschicht 12, jedoch ohne wärmeleitende Füllstoffe. Hingegen kann auch die Abdeckleiste 24 mit einer Verstärkungseinlage beispielsweise in Form von Glasfasern versehen sein. Die Abdeckleiste 40 an der Stosstelle 42 ist zweckmässigerweise wieder mit einem wärmeleitenden Füllmaterial versehen und kann überdies noch eine Verstärkungseinlage enthalten.

Der ganze Aufbau des Plattenelementes ist so getroffen, dass die Gesamtdicke ungefähr 25 mm beträgt. Die Grösse des Plattenelementes ist vorzugsweise 450 x 900 oder 600 x 900 mm. Jedes Plattenelement enthält eine einem Verlegeraster entsprechende Anzahl von Ausnehmungen 6 für die Rohre 8, deren Abstand vorzugsweise 150 mm beträgt.

Die Figur 2 zeigt ein weiteres Ausführungsbeispiel eines Plattenelementes, bei dem die Wärmeleitschicht 66 zwischen der Isolationsschicht 68 und der Lastverteilschicht 70 eingebettet ist. Die Wärmeleitschicht 66, die wiederum aus einem Metallblech besteht, weist ein angeformtes Verankerungsglied 72 auf, das in die Isolationsschicht 68 eingebettet ist.

Bei dem Plattenelement der Figur 3 ist wiederum ein Wärmeleitblech 74 zwischen eine Isolationsschicht 76 und eine Lastverteilschicht 78 eingebettet. Das Wärmeleitblech 74 enthält eine Oeffnung 80, durch die beim Auftragen der Lastverteilschicht 48 und Verpressen derselben ein Materialpfropfen 82 in die weichere Isolationsschicht 76 eingepresst worden ist und die Verbindung zwischen den Schichten herstellt oder verbessert.

Beim Ausführungsbeispiel der Figur 4 ist wiederum ein Wärmeleitblech 84 zwischen einer Isolationsschicht 86 und einer Lastverteilschicht 88 eingebettet. Zur Befestigung der Lastverteilschicht 88 ist eine druckknopfartige Verrastvorrichtung 90 vorhanden, wobei das mit der Isolationsschicht 86 fest verbundene Wärmeleitblech 84 eine Rastausnehmung 92 enthält, in die ein kopfartiges Rastelement 94 der Lastverteilschicht 88 einrastet. Die Anordnung kann so getroffen sein, dass die Verbindung zwischen der Lastverteilschicht 88 und dem Wärmeleitblech 84 bzw. der Isolationsschicht 86 ausschliesslich über eine Vielzahl von über das Plattenelement verteilten Verrastvorrichtungen 90 erfolgt.

Die Figur 5 zeigt ein weiteres Plattenelement, bei dem ein Wärmeleitblech 96 sandwichartig zwischen einer Isolationsschicht 98 und einer Lastverteilschicht 100 eingebettet ist. Die Isolationsschicht 98 enthält wiederum eine Ausnehmung 102 zur Aufnahme des Rohres 8 sowie eine Ausnehmung 104 zur Aufnahme einer Abdeckleiste 106. Letztere übergreift die Ausnehmung 102 und eine erweiternde Ausnehmung 108. Die Abdeckleiste 106 ist mittels einer druckknopfartigen Verrastvorrichtung 110 analog der Verrastvorrichtung 90 der Figur 4, mit dem Wärmeleitblech 96 und damit auch mit der Isolationsschicht 98 verbunden. Hierzu enthält das Wärmeleitblech 96 angeformte Rastausnehmungen 112 und die Abdeckleiste 106 enthält nach unten vorstehende kopfartige Rastelemente 114, die in die Rastausnehmung 112 einrasten. Anstelle der Verrastvorrichtung 110 kann die Abdeckleiste 106 auch mit nicht dargestellten angeformten Saugnäpfen versehen sein, die sich am Boden der Ausnehmungen 104 festsaugen. Im übrigen entspricht das Plattenelement der Figur 6 im wesentlichen dem Plattenelement der Figur 1.

## Patentansprüche

1. Flächenklimatisieranlage, welche aneinandergereihte, vorgefertigte Plattenlemente (2,10;66,68;76,74;86,84;98,96) jeweils aus einer Isolationsschicht (2,68,76,86,98) und an deren Oberfläche befestigtem Wärmeleitblech (10,66, 74,84,96), wobei die Plattenelemente entsprechend einem Verlegeraster angeordnete Ausnehmungen (6,102) aufweisen, in denen Rohre (8) für ein Wärmeübertragungsmedium angeordnet sind, wobei die Tiefe der Ausnehmung grösser ist als der Durchmesser der Rohre, sowie mit einer über den Plattenelementen (2,10;66,68;76,74;86,84;96,98) angeordneten Lastverteilschicht (12,70,78,88,100,106), deren Dicke (D₂) kleiner ist als die Dicke (D₁) der Plattenlemente und wobei der Wärmeübergang im Bereich der Ausnehmung (6,102) kleiner ist als im übrigen Bereich, dadurch gekennzeichnet, dass die Ausnehmungen (6,102) oberhalb der Rohre (8) eine stufenartige Erweiterung (22,104,108) aufweisen und die Lastverteilschicht (12,70,78,88, 100,106) mit dem Wärmeleitblech (10,66,74,84,96) fest verbunden und im Bereich der erweiterten Ausnehmung (6,22,102,104,108) eine Abdeckleiste (24,106) aufweist, die die erweiterte Ausnehmung (6,22,102,104,108) seitlich übergreift und gegenüber der Lastverteilschicht (12,70,78,88,100,106) eine grössere Festigkeit aufweist, das Ganze derart, dass die Gesamtdicke des Aufbaus ungefähr 25 mm ist.

2. Flächenklimatisieranlage nach Anspruch 1, dadurch gekennzeichnet, dass das Wärmeleitblech (10) in der Ausnehmung (6) mindestens abschnittweise mit Abstand von dessen Innenwandung (16) angeordnet ist.

3. Flächenklimatisieranlage nach Anspruch 2, dadurch gekennzeichnet, dass das Wärmeleitblech (10) im Bereich der Ausnehmung (6) quer zur Längsrichtung der Ausnehmung verlaufende, nach aussen weisende Sicken (18) aufweist, welche den Abstand zur Innenwandung (16) der Ausnehmung bestimmen.

4. Flächenklimatisieranlage nach einem der Ansprüche 1 bis 3, dadurch gekennzeichnet, dass die Abdeckleiste (24,106) eine geringere Wärmeleitfähigkeit als die übrige Lastverteilschicht aufweist.

5. Flächenklimatisieranlage nach einem der Ansprüche 1 bis 4, dadurch gekennzeichnet, dass die Lastverteilschicht (12) im Bereich der Stossstelle (42) mit einem benachbarten Plattenelement (P₂) durch eine die Stossstelle (42) übergreifende Abdeckleiste (40) gebildet ist.

6. Flächenklimatisieranlage nach einem der Ansprüche 4 und 5, dadurch gekenn-zeichnet, dass die Abdeckleiste (106) dicker ist als die Lastverteilschicht (100) und die Isolationsschicht (98) eine entsprechende Ausnehmung (104) zur Aufnahme der Abdeckleiste (106) aufweist, derart, dass die Oberseite der Abdeckleiste mit der Oberseite der angrenzenden Lastverteilschicht bündig ist.

7. Flächenklimatisieranlage nach einem der Ansprüche 4 bis 6, dadurch gekennzeichnet, dass die Abdeckleisten (24,40,106) eine Verstärkungseinlage, vorzugsweise eine Glasfaserverstärkung aufweisen.

8. Flächenklimatisieranlage nach einem der Ansprüche 4 bis 6, dadurch gekennzeichnet, dass die Abdeckleisten (24,40) einseitig gelenkig mit der Lastverteilschicht (12) verbunden sind.

9. Flächenklimatisieranlage nach einem der Ansprüche 4 bis 6, dadurch gekennzeichnet, dass die Abdeckleisten (24,40,106) verrastbar angeordnet sind.

10. Flächenklimatisieranlage nach einem der Ansprüche 1 bis 9, dadurch gekennzeichnet, dass es an zwei benachbarten Stirnseiten (32) jeweils einen vorzugsweise konischen Kamm (36) und an den übrigen Stirnseiten (34) jeweils entsprechende Nuten (38) aufweist.

11. Flächenklimatisieranlage nach einem der Ansprüche 1 bis 10, dadurch gekennzeichnet, dass die Stirnseiten mit Stirnseiten benachbarter Plattenelemente verrastbar ausgebildet sind.

12. Flächenklimatisieranlage nach einem der Ansprüche 1 bis 11, dadurch gekennzeichnet, dass die Isolationsschicht (2,68,76,86,98) und die Lastverteilschicht (12,70,78,88,100) aus dem gleichen Werkstoff bestehen, wobei die Schichten jedoch unterschiedliche Raumgewichte aufweisen.

13. Flächenklimatisieranlage nach einem der Ansprüche 1 bis 12, dadurch gekennzeichnet, dass die Lastverteilschicht (12,70,78,88,100) einen wärmeleitenden Füllstoff, beispielsweise Graphit- oder Aluminiumpulver enthält.

14. Flächenklimatisieranlage nach einem der Ansprüche 1 bis 13, dadurch gekennzeichnet, dass unter der Isolationsschicht (2) noch eine Filz- oder Vliesschicht angeordnet ist.

15. Flächenklimatisieranlage nach einem der Ansprüche 1 bis 14, dadurch gekennzeichnet, dass die einzelnen Schichten miteinander verklebt sind.

16. Flächenklimatisieranlage nach einem der Ansprüche 1 bis 14, dadurch gekennzeichnet, dass die Lastverteilschicht (78,88) formschlüssig, vorzugsweise mittels Rastelementen (82,90) mit der Wärmeleitschicht (74,84) und der Isolationsschicht (76,86) verbunden ist.

## Claims

1. A surface air temperature controlling installation comprising prefabricated panel members (2,10;66,68;76,74;86,84;98,96) arranged in series, each panel member consisting of an insulation layer (2,68,76, 86,98) and a heat conduction sheet (10,66,74,84,96), secured to the surface of said insulation, the panel members having recesses (6,102) arranged according to an assembly pattern, in which recesses pipes (8) are provided for a heat transfer medium, the depth of the recess being greater than the diameter of the pipes, and a load distribution layer (12,70,78,88,100,106) arranged above the panel members (2,10;66,68;76,74;86,84;96,98), the thickness (D₂) of said load distribution layer being smaller than the thickness (D₁) of the panel members and the heat transfer within the region of the recess (6, 102) being less than in the remaining region,
characterised in that the recesses (6,102) have a step-like widened portion (22,104,108) above the pipes (8) and the load distribution layer (12,70,78,88,100,106) is firmly connected with the heat conduction sheet (10,66, 74,84,96) and has within the region of the widened recess (6,22,102,104,108) a cover strip (24,106) which engages laterally over the widened recess (6,22,102,104, 108) and has a greater strength with respect to the load distribution layer (12,70,78,88,100,106) such that the total thickness of the entire structure is about 25 mm.

2. A surface air temperature controlling installation according to claim 1, characterised in that heat conduction sheet (10) is arranged in the recess (6) at least in regions at a spacing from the inner wall (16) thereof.

3. A surface air temperature controlling installation according to claim 2, characterised in that the heat conduction sheet (10) has, in the region of the recess (6), outwardly oriented creases (18) extending transversely to the longitudinal direction of the recess, said creases defining the spacing from the inner wall (16) of the recess.

4. A surface air temperature controlling installation according to one of claims 1 to 3, characterised in that the load distribution layer within the region of the recess has a lower heat conductivity than the remaining load distribution layer.

5. A surface air temperature controlling installation according to one of claims 1 to 4, characterised in that the load distribution layer (12), in the region of the abutment (42), is formed by a cover strip (40) overlapping the abutment joint (42) with an adjoining panel member (P₂).

6. A surface air temperature controlling installation according to one of claims 4 and 5, characterised in that the cover strip (106) is thicker than the load distribution layer (100) and the insulation layer has a corresponding recess (104) for receiving the cover strip (106) so that the upper side of the cover strip is flush with the upper side of the adjoining load distribution layer.

7. A surface air temperature controlling installation according to one of claims 4 to 6, characterised in that the cover strips (24,40,106) have a reinforcement insert, preferably a glass fibre reinforcement.

8. A surface air temperature controlling installation according to one of claims 4 to 6, characterised in that the cover strips (24,40) have, on one side, a hinged connection with the load distribution layer (12).

9. A surface air temperature controlling installation according to one of claims 4 to 6, characterised in that the cover strips are lockably arranged.

10. A surface air temperature controlling installation according to one of claims 1 to 9, characterised in that it has a preferably conical ridge (36) on both of two adjoining end faces (32) and corresponding grooves (38) on each of the remaining end faces (34)

11. A surface air temperature controlling installation according to one of claims 1 to 10, characterised in that the end faces are constructed so as to be lockable with end faces of adjacent panel members.

12. A surface air temperature controlling installation according to one of claims 1 to 11, characterised in that the insulation layer (2,68,76,86,98) and the load distribution layer (12,70,78,88,100) are made of the same material, the layers however having different volumetric weights.

13. A surface air temperature controlling installation according to one of claims 1 to 12, characterised in that load distribution layer (12,70,78,88,100) contains a heat conductive filler, for example powdered graphite or aluminium.

14. A surface air temperature controlling installation according to one of claims 1 to 13, characterised in that there is also a layer of felt or fleece under the insulation layer (2).

15. A surface air temperature controlling installation according to one of claims 1 to 14, characterised in that the individual layers are glued together.

16. A surface air temperature controlling installation according to one of claims 1 to 14, characterised in that the load distribution layer (78,88) is positively connected with the heat conduction layer (74,84) and the insulation layer (76,86), preferably by means of locking members (82,90).

## Revendications

1. Installation de climatisation par panneaux, avec des éléments de panneaux préfabriqués, rangés les uns à côté des autres (2,10 ; 66,68 ; 76,74 ; 86,84 ; 98,96) constitués respectivement d'une couche d'isolation (2,68,76,86,98) et d'une feuille conductrice de la chaleur (10,66,74,84,96) fixée sur sa surface, les éléments de panneaux présentant des évidements (6,102) correspondant à une trame de pose, dans lesquels sont disposés des tubes (8) pour un agent caloporteur, la profondeur de l'évidement étant plus grande que le diamètre des tubes, ainsi qu'avec une couche de répartition de la charge (12,70,78,88,100,106), disposée sur les éléments à panneaux (2,10 ; 66,68 ; 76,74 ; 86,84; 96,98), dont l'épaisseur (D₂) est plus petite que l'épaisseur (D₁ des éléments de panneaux et le passage de chaleur dans la zone de l'évidement (6, 102) étant plus petit que dans la zone résiduelle, caractérisée en ce que les évidements (6, 102)) présentent au-dessus des tubes (8) un élargissement à gradins (22, 104, 108) et la couche de répartition de la charge (12, 79, 78, 88, 100, 106) est reliée solidairement à la feuille conductrice de la chaleur (10,66, 74, 84, 96) et présente dans la zone de l'évidement élargi (6, 22, 102, 104, 108), une lame de recouvrement (24, 106) qui entoure latéralement l'évidement élargi (6, 22, 102, 104, 108) et présente une plus grande résistance par rapport à la couche de répartition de la charge (12, 70, 78, 88, 100, 106), le tout de telle façon que l'épaisseur totale de la construction soit environ de 25 mm.

2. Installation de climatisation par panneaux selon la revendication 1, caractérisée ne ce que la feuille de conduction de la chaleur (10) est disposée dan l'évidement (6) au moins par sections à une certaine distance de sa paroi intérieure (16).

3. Installation de climatisation par panneaux selon la revendication 2, caractérisée en ce que la feuille de conduction de la chaleur (10) dans la zone de l'évidement (6) présente des joncs (18) orientés vers l'extérieur s'étendant perpendiculairement à la direction longitudinale, qui déterminent la distance par rapport à la paroi intérieure (16) de l'évidement.

4. Installation de climatisation par panneaux selon l'une des revendications 1 à 3, caractérisée en ce que la lame de recouvrement (24, 106) présente une conductibilité thermique plus faible que la couche résiduelle de répartition de la chaleur.

5. Installation de climatisation par panneaux selon l'une des revendications 1 à 4, caractérisée en ce que la couche de répartition de la charge (12) est formée dans la zone des jonctions (42) avec un élément de panneau voisin (P₂) par une lame de recouvrement (40) venant en prise sur le point de jonction (42).

6. Installation de climatisation par panneaux selon l'une des revendications 4 et 5, caractérisée en ce que la lame de recouvrement (106) est plus épaisse que la couche de répartition de la chaleur (100) et en ce que la couche d'isolation (98) présente un évidement correspondant (104) pour recevoir la lame de recouvrement (106), de telle sorte que la surface de la lame de recouvrement vienne à fleur avec la surface de la couche adjacente de répartition de la charge.

7. Installation de climatisation par panneaux selon l'une des revendications 4 à 6, caractérisée en ce que les lames de recouvrement (24, 40, 106) présentent une addition de renforcement, de préférence un renforcement en fibres de verre.

8. Installation de climatisation par panneaux selon l'une des revendications 4 à 6, caractérisée en ce que les lames de recouvrement (24, 40) sont reliées d'un côté de façon articulée à la couche de répartition de la charge (12).

9. Installation de climatisation par panneaux selon l'une des revendications 4 à 6, caractérisé en ce que les lames de recouvrement (24, 40, 106) sont disposées de façon à pouvoir être encliquetées.

10. Installation de climatisation par panneaux selon l'une des revendications 1 à 9, caractérisée en ce qu'elle présente sur deux faces frontales voisines (32) respectivement un peigne (36) de préférence conique et sur les faces frontales résiduelles (34) des rainures correspondantes (38).

11. Installation de climatisation par panneaux selon l'une des revendications 1 à 10, caractérisée en ce que les faces frontales sont constituées de façon à pouvoir être encliquetées avec les faces frontales des éléments de panneaux voisins.

12. Installation de climatisation par panneaux selon l'une des revendications 1 à 11, caractérisée en ce que la couche d'isolation (2, 68, 76, 86, 98) et la couche de répartition de la charge (12, 70, 78, 88, 100) consiste en la même matière, les couches présentant toutefois des poids spécifiques différents.

13. Installation de climatisation par panneaux selon l'une des revendications 1 à 12, caractérisée en ce que la couche de répartition de la charge (12, 70, 78, 88, 100) contient une matière de remplissage conduisant la chaleur, par exemple de la poudre de graphite ou d'aluminium.

14. Installation de climatisation par panneaux selon l'une des revendications 1 à 13, caractérisée en ce que l'on dispose sous la couche d'isolation (2) encore une couche de feutre ou de non-tissé.

15. Installation de climatisation par panneaux selon l'une des revendications 1 à 14, caractérisée en ce que les différentes couches sont celées les unes aux autres.

16. Installation de climatisation selon l'une des revendications 1 à 14, caractérisée en ce que la couche de répartition de la charge (78, 88) est reliée, par liaison par la forme, de préférence au moyen des éléments d'encliquetage (82, 90) à la couche conductrice de la chaleur (74, 84) et à la couche d'isolation (76, 86).
